# EUROPÄISCHE PATENTSCHRIFT

(11) **EP 3 663 551 B1**
(45) Veröffentlichungstag und Bekanntmachung des Hinweises auf die Patenterteilung: **15.02.2023**
(21) Anmeldenummer: 19212427.9
(22) Anmeldetag: 29.11.2019
(51) Int. Cl.: F01N 3/10, F01N 13/00, F01N 3/28, F01N 3/20, B01F 23/213, B01F 25/314, B01F 25/25

(54) **VORRICHTUNG ZUM EINBRINGEN UND VERTEILEN EINES FLIESSFÄHIGEN ZUSATZSTOFFS IN EINEN ABGASSTROM**
DEVICE FOR INTRODUCING AND DIFFUSING A FLUID ADDITIVE INTO AN EXHAUST GAS STREAM
DISPOSITIF POUR INTRODUIRE ET DISTRIBUER UN ADDITIF FLUIDE DANS UN FLUX DE GAZ D'ÉCHAPPEMENT

(30) Priorität: 03.12.2018 DE 102018130716
(43) Veröffentlichungstag der Anmeldung: 10.06.2020
(73) Patentinhaber: Friedrich Boysen GmbH & Co. KG, 72213 Altensteig (DE)
(72) Erfinder: Sauer, Stefan, 77218 Wildberg (DE); Prokopp, Markus, 71131 Jettingen (DE); Schleh, Michael, 72285 Pfalzgrafenweiler (DE); Kobe, Jürgen, 72622 Nürtingen (DE); Wied, Moritz, 72074 Tübingen (DE); Riepshoff, Matthias, 72202 Nagold (DE)
(74) Vertreter: Manitz Finsterwald Patent- und Rechtsanwaltspartnerschaft mbB

(56) Entgegenhaltungen:
- WO-A1-2018/153162
- DE-A1-102013 221 428
- KR-B1- 101 837 559
- US-A1- 2010 005 790
- US-A1- 2018 326 372

## Beschreibung

Die vorliegende Erfindung betrifft eine Vorrichtung zum Einbringen und Verteilen eines fließfähigen Zusatzstoffs in einen Abgasstrom, umfassend einen Einlass zum Empfangen des Abgasstroms von einer ersten Abgasbehandlungseinrichtung, einen Auslass zur Abgabe des Abgasstroms an eine zweite Abgasbehandlungseinrichtung, eine Strömungsleiteinrichtung zum Führen des Abgasstroms vom Einlass zum Auslass und einen in die Strömungsleiteinrichtung mündenden Injektor, wobei durch den Einlass und den Auslass eine zumindest im Wesentlichen geradlinige Hauptströmungsrichtung der Vorrichtung definiert ist.

Die Abgase von Brennkraftmaschinen werden im Allgemeinen vor dem Ausstoß in die Atmosphäre einem Reinigungsprozess oder mehreren Reinigungsprozessen unterzogen, um die Umweltbelastung zu begrenzen. Häufig erfordern solche Reinigungsprozesse das Einbringen und Verteilen flüssiger Zusatzstoffe in den Abgasstrom. Die Zusatzstoffe werden im Allgemeinen mittels des Injektors in den heißen Abgasstrom eingesprüht. Beispielsweise ist es zur Reduzierung von Stickoxiden im Abgas von Dieselmotoren bekannt, eine selektive katalytische Reduktion (SCR von *selective catalytic reduction*) durchzuführen, die in einem sogenannten SCR-Katalysator unter Verwendung eines Reduktionsmittels durchgeführt wird. Speziell kann eine wässrige Harnstofflösung ins Abgas eingespritzt werden. Der Harnstoff zerfällt im Abgas zu Ammoniak, welches mit den Stickoxiden des Abgases reagiert.

Im Sinne einer effektiven Abgasbehandlung ist es wichtig, dass der Zusatzstoff möglichst gleichmäßig mit dem Abgas vermischt wird und möglichst vollständig in die Gasphase überführt wird. Dies kann durch eine ausreichend lange Mischstrecke mit dementsprechend langer Verweilzeit gewährleistet werden. Aufgrund von Bauraumbeschränkungen ist es aber in der Praxis oft schwierig, lange Mischstrecken bei akzeptablem Druckverlust bereitzustellen. Bei motornahen SCR-Systemen ist diese Problematik besonders ausgeprägt, da im Motorraum besonders beengte Platzverhältnisse herrschen.

Die US 2018/326372 A1 offenbart eine Mischeranordnung, bei welcher der Gasstrom quer zur Hauptströmungsrichtung umgelenkt und zusätzlich in Rotation versetzt wird.

In der DE 10 2013 221 428 A1 ist eine Abgasanlage offenbart, bei der ein Zusatzstoff seitlich in eine von der Abgasströmung durchströmbare Injektionskammer eingespritzt wird.

Die KR 10-1837559 B1 offenbart eine Mischeranordnung, die ein Innenrohr und ein Außenrohr umfasst, durch welche der eintretende Gasstrom in zwei Teilströme aufgeteilt wird.

Die US 2010/005790 A1 offenbart eine Vorrichtung zum Einspritzen von Harnstofflösung in ein perforiertes Rohr.

Es ist eine Aufgabe der Erfindung, eine Vorrichtung zum Einbringen und Verteilen eines fließfähigen Zusatzstoffs in einen Abgasstrom anzugeben, die kompakt ist, nur einen relativ geringen Druckverlust verursacht und dennoch eine effektive Vermischung und Verdampfung des Zusatzstoffs ermöglicht.

Die Lösung der Aufgabe erfolgt durch eine Vorrichtung mit den Merkmalen des Anspruchs 1.

Bei einer erfindungsgemäßen Vorrichtung ist vorgesehen, dass ein stromabwärts des Injektors angeordneter Mischabschnitt der Strömungsleiteinrichtung schräg oder quer zur Hauptströmungsrichtung verläuft. Die Strömungsleiteinrichtung führt den Abgasstrom mit dem eingebrachten Zusatzstoff also nicht direkt zum Auslass, sondern über einen Umweg. Dadurch verlängert sich die Mischstrecke und die Verweilzeit des Zusatzstoffs ist größer. Somit ist trotz der platzsparenden Konstruktion eine effektive Vermischung und Verdampfung des eingespritzten Zusatzstoffs ermöglicht, die sich durch die grundsätzlich geradlinige Hauptströmungsrichtung ergibt.

Der Mischabschnitt muss nicht zwingend geradlinig verlaufen. Auch ein zumindest teilweise gekrümmter Mischabschnitt kann bei abschnittsweiser Betrachtung schräg oder quer zur Hauptströmungsrichtung verlaufen.

Der Einlass und der Auslass können jeweilige Durchtrittsflächen aufweisen, die sich zumindest im Wesentlichen parallel zueinander erstrecken und/oder die sich in der Hauptströmungsrichtung gesehen zumindest bereichsweise überlappen. Eine solchermaßen gestaltete Vorrichtung ist besonders kompakt und kann motornah verbaut werden. Insbesondere können der Einlass und der Auslass zumindest im Wesentlichen koaxial bezüglich der Hauptströmungsrichtung angeordnet sein. Vorzugsweise sind der Einlass und der Auslass zum direkten Anschluss an die Abgasbehandlungseinrichtungen oder deren Gehäuse ausgebildet. Zu diesem Zweck können der Einlass und der Auslass entsprechende Anbauflansche aufweisen. Vorzugsweise ist die Vorrichtung derart ausgebildet, dass der gesamte aus der ersten Abgasbehandlungseinrichtung tretende Abgasstrom in den Einlass gelangt und/oder der gesamte aus dem Auslass tretende Abgasstrom in die zweite Abgasbehandlungseinrichtung gelangt.

Eine Ausführungsform der Erfindung sieht vor, dass der Mischabschnitt in einem Winkelbereich zwischen 30° und 150°, bevorzugt zwischen 60° und 120°, besonders bevorzugt zwischen 70° und 100°, bezogen auf die Hauptströmungsrichtung verläuft. Insbesondere kann der Mischabschnitt rechtwinklig zur Hauptströmungsrichtung verlaufen. Dadurch ergibt sich eine besonders ausgeprägte Verlängerung der Mischstrecke. Der Mischabschnitt ist vorzugsweise rohrartig oder kanalartig ausgeführt. Ein Verlauf in einem bestimmten Winkelbereich wie vorstehend angegeben bedeutet bei dieser Ausgestaltung, dass die Stellung der Rohrachse oder Kanalachse einen Winkel zur Hauptströmungsrichtung aufweist, der in dem betreffenden Bereich liegt. Im Falle eines gekrümmten Mischabschnitts liegen alle lokal definierbaren Rohrachsen oder Kanalachsen innerhalb des betreffenden Bereichs.

Gemäß einer speziellen Ausgestaltung der Erfindung weist die Strömungsleiteinrichtung einen stromaufwärts des Mischabschnitts angeordneten Umlenkungsabschnitt zum Umlenken des Abgasstroms und/oder zum Erzeugen einer Verwirbelung des Abgasstroms in dem Mischabschnitt auf. Der Umlenkungsabschnitt kann den Übergang von einem mit dem Einlass fluchtenden Eingangsabschnitt der Strömungsleiteinrichtung zu dem Mischabschnitt bilden. Eine Verwirbelung des Abgasstroms verbessert die Verteilung und Verdampfung des Zusatzstoffs.

Es kann vorgesehen sein, dass sich der Mischabschnitt in Hauptströmungsrichtung gesehen von einem ersten radialen Außenbereich des Einlasses bis zu einem entgegengesetzten zweiten radialen Außenbereich des Einlasses erstreckt. Das heißt der Mischabschnitt kann sich bei axialer Betrachtung wenigstens einmal quer über den Einlass hinweg erstrecken, wodurch eine ausgeprägte Verlängerung der Mischstrecke ermöglicht ist.

Erfindungsgemäß ist vorgesehen, dass die Strömungsleiteinrichtung einen ersten, den Mischabschnitt umfassenden Strömungspfad für einen ersten Teilstrom des Abgasstroms und einen separaten zweiten Strömungspfad für einen zweiten Teilstrom des Abgasstroms definiert, wobei der erste und der zweite Strömungspfad in strömungstechnischer Hinsicht parallel zueinander angeordnet sind. Ein Vorteil dieser Ausbildung besteht darin, dass ein Teil des Abgasstroms auf einem anderen, z. B. im Sinne eines verringerten Druckverlusts, kürzeren Weg zum Auslass geführt werden kann als durch den Mischabschnitt vorgegeben ist. Der Begriff "parallel" ist hierbei abstrakt im Sinne einer Parallelschaltung zu verstehen und nicht etwa im geometrisch strengen Sinne. Das heißt die tatsächlichen Ströme in den beiden Strömungspfaden können prinzipiell schräg, quer oder gegensätzlich zueinander verlaufen.

Weiterbildungen der Erfindung sind den abhängigen Ansprüchen, der Beschreibung sowie den beigefügten Zeichnungen zu entnehmen.

Gemäß einer Ausführungsform der Erfindung mündet der Injektor in den ersten Strömungspfad, insbesondere in einen stromaufwärtigen Eintrittsabschnitt des ersten Strömungspfads. Das heißt es ist bevorzugt, dass der Injektor zum Einsprühen des Zusatzstoffs in denjenigen Strömungspfad ausgebildet ist, der zumindest abschnittsweise schräg oder quer zur Hauptströmungsrichtung verläuft. In dem verlängerten Strömungspfad kann eine effektive Vermischung des Zusatzstoffs stattfinden.

Bevorzugt ist der zweite Strömungspfad für einen größeren Teilstrom ausgelegt als der erste Strömungspfad. Als besonders günstig haben sich Ausgestaltungen erwiesen, bei welchen der zweite Strömungspfad für einen Massenstrom von wenigstens 70% und höchstens 99%, vorzugsweise von wenigstens 80% und höchstens 99%, besonders bevorzugt von wenigstens 90% und höchstens 97% des gesamten Massenstroms ausgelegt ist.

Der zweite Strömungspfad umfasst einen Drallerzeugungsabschnitt, der während des Betriebs der Vorrichtung aufgrund seiner Formgebung einen Drall, insbesondere einen Doppeldrall, in dem betreffenden Teilstrom erzeugt. Bei einer Vereinigung des ersten und des zweiten Strömungspfads wird der vom Injektor kommende vorvermischte Teilstrom aufgrund des Dralls besonders effektiv mit dem anderen Teilstrom vermischt.

Erfindungsgemäß ist der Mischabschnitt zumindest abschnittsweise um den Drallerzeugungsabschnitt herumgeführt. Dadurch ergibt sich eine besonders kompakte Konstruktion. Außerdem findet dadurch eine ausgeprägte Übertragung thermischer Energie vom Drallerzeugungsabschnitt auf den Mischabschnitt statt, welche die Verdampfung unterstützt.

Vorzugsweise ist der Drallerzeugungsabschnitt zum Erzeugen wenigstens eines Dralls ausgebildet, dessen Drallachse schräg oder quer, vorzugsweise zumindest im Wesentlichen rechtwinklig, zur Hauptströmungsrichtung angeordnet ist. Ein solcher Drall lässt sich durch entsprechende Formgebung der Wände relativ leicht erzeugen.

Insbesondere kann der Drallerzeugungsabschnitt wenigstens einen gekrümmten Wandabschnitt, vorzugsweise zwei gegenüberliegende und jeweils nach außen gekrümmte Wandabschnitte, aufweisen. Beim Auftreffen des Abgasstroms auf den gekrümmten Wandabschnitt kommt es zu einer drallerzeugenden Strömungsumlenkung. Zwei gegenüberliegende und jeweils nach außen gekrümmte Wandabschnitte erzeugen auf einfache Weise einen Doppeldrall.

Der Mischabschnitt kann in eine Umlenkkammer münden, welche den aus dem Mischabschnitt austretenden Teilstrom umlenkt und einem Gasaustrittskanal zuführt, der mit dem Drallerzeugungsabschnitt in Strömungsverbindung steht. Die Umlenkkammer kann eine weitere Verwirbelung erzeugen und so die Vermischung verbessern. Außerdem können die heißen Oberflächen der Umlenkkammer die Verdampfung des Zusatzstoffs fördern.

Es kann sein, dass die Umlenkkammer eine zumindest im Wesentlichen U-förmige Umlenkung bewirkt und/oder der Mischabschnitt und der Gasaustrittskanal sich zumindest im Wesentlichen in gegensätzlichen Richtungen erstrecken. Hierbei ist der Ausdruck "in gegensätzlichen Richtungen" strömungstechnisch zu verstehen und nicht in geometrisch strengem Sinne. Insbesondere können sich der Mischabschnitt und der Gasaustrittskanal jeweils zumindest im Wesentlichen einmal durch die gesamte Strömungsleiteinrichtung hindurch erstrecken. Eine durch den Mischabschnitt, die Umlenkkammer und den Gasaustrittskanal gebildete Anordnung kann insgesamt in etwa eine U-Form aufweisen.

Gemäß einer speziellen Ausgestaltung der Erfindung steht der Gasaustrittskanal zumindest durch eine, insbesondere längliche, Austrittsöffnung mit dem Drallerzeugungsabschnitt in Strömungsverbindung. Durch das Zuführen des vorvermischten Teilstroms in den Drallerzeugungsabschnitt kann eine gute Verteilung des den Zusatzstoff enthaltenden Teilstroms im Drallbereich erfolgen. Der Gasaustrittskanal kann auch einen oder mehrere Austrittsabschnitte mit zumindest einer Austrittsöffnung aufweisen. Es kann ferner vorgesehen sein, dass sich eine längliche Austrittsöffnung zumindest im Wesentlichen einmal durch die gesamte Strömungsleiteinrichtung hindurch erstreckt.

Eine weitere Ausführungsform der Erfindung sieht vor, dass in dem Drallerzeugungsabschnitt ein Leitelement angeordnet ist, das durch die Austrittsöffnung tretendes Abgas in Richtung einer Wand des Drallerzeugungsabschnitts ablenkt. Dies begünstigt die Ausbildung eines Dralls oder Doppeldralls in dem Drallerzeugungsabschnitt. Insbesondere kann es den Drallbereich vor einer direkten Anströmung abschirmen. Vorzugsweise ist das Leitelement als einfaches (ein- oder mehrstückiges) Blechbauteil ausgebildet.

Eine spezielle Ausgestaltung der Erfindung sieht vor, dass das Leitelement einen U-förmigen oder V-förmigen Querschnitt oder eine Kombination davon aufweist.

Vorzugsweise ist das Leitelement im Querschnitt betrachtet abschnittsweise gekrümmt. Dies hat sich für eine Unterstützung der Drallbildung als besonders günstig herausgestellt.

Gemäß einer weiteren Ausführungsform der Erfindung weist der Drallerzeugungsabschnitt einen Eingang auf, dessen Eingangsfläche sich zumindest im Wesentlichen parallel zu einer Durchtrittsfläche des Einlasses erstreckt, und/oder der Drallerzeugungsabschnitt weist einen Ausgang auf, dessen Ausgangsfläche sich zumindest im Wesentlichen schräg, insbesondere senkrecht zu einer Durchtrittsfläche des Auslasses erstreckt. Für eine platzsparende Ausführung ist es besonders bevorzugt, dass sich der Drallerzeugungsabschnitt direkt an den Einlass anschließt.

Der Drallerzeugungsabschnitt kann einen Ausgang aufweisen, der derart angeordnet ist, dass aus diesem austretendes Abgas wenigstens einen Abschnitt des ersten Strömungspfads beaufschlagt. Dadurch wird dem ersten Strömungspfad thermische Energie zugeführt, welche die Verdampfungsleistung erhöht. Insbesondere kann der Ausgang des Drallerzeugungsabschnitts derart angeordnet sein, dass ein Injektionsbereich des ersten Strömungspfads beaufschlagt wird. Dadurch kann einer Kühlung des ersten Strömungspfads durch auftreffendes Spray entgegengewirkt werden.

Gemäß einer weiteren Ausführungsform der Erfindung weist der Drallerzeugungsabschnitt einen Ausgang auf, der derart angeordnet ist, dass aus diesem austretendes Abgas vor Erreichen des Auslasses um wenigstens 20°, vorzugsweise um wenigstens 30°, umgelenkt wird. Hierdurch wird die Verwirbelung weiter verbessert. Zudem wird die Mischstrecke zusätzlich verlängert.

Die vorliegende Erfindung betrifft auch eine Abgasanlage mit einer ersten Abgasbehandlungseinrichtung, insbesondere einem Oxidationskatalysator, einer zweiten Abgasbehandlungseinrichtung, insbesondere einem Reduktionskatalysator, und einer Vorrichtung zum Einbringen und Verteilen eines fließfähigen Zusatzstoffs in einen von der ersten Abgasbehandlungseinrichtung zur zweiten Abgasbehandlungseinrichtung geführten Abgasstrom.

Erfindungsgemäß ist die Vorrichtung zum Einbringen und Verteilen des fließfähigen Zusatzstoffs wie vorstehend beschrieben ausgebildet und zwischen der ersten und der zweiten Abgasbehandlungseinrichtung angeordnet. Auf diese Weise wird ein kompaktes und gleichzeitig effektives SCR-System bereitgestellt.

Vorzugsweise ist vorgesehen, dass die erste Abgasbehandlungseinrichtung, die zweite Abgasbehandlungseinrichtung und die Vorrichtung zum Einbringen und Verteilen des fließfähigen Zusatzstoffs in ein gemeinsames, einstückiges oder mehrstückiges Gehäuse integriert sind und/oder zumindest im Wesentlichen absatzlos aneinander anschließen. Dadurch ergibt sich eine besonders kompakte Bauweise. Insbesondere kann eine entsprechende Vorrichtung im Motorbereich eines Personenkraftwagens verbaut werden.

Es kann vorgesehen sein, dass eine Austrittsfläche der ersten Abgasbehandlungseinrichtung und eine Eintrittsfläche der zweiten Abgasbehandlungseinrichtung sich zumindest im Wesentlichen parallel zueinander erstrecken und/oder in einer geradlinigen Hauptströmungsrichtung gesehen zumindest bereichsweise überlappen. Eine derartige Konfiguration ist besonders kompakt.

Die Erfindung wird nachfolgend beispielhaft unter Bezugnahme auf die schematischen (Schnitt-)Zeichnungen beschrieben.
- Fig. 1: zeigt eine Brennkraftmaschine mit einer erfindungsgemäßen Abgasanlage in einer vereinfachten Seitenansicht.
- Fig. 2: zeigt die Anordnung gemäß Fig. 1 von hinten.
- Fig. 3: zeigt eine Strömungsleiteinrichtung der in Fig. 1 dargestellten Abgasanlage von oben.
- Fig. 4: zeigt schematisch den Strömungsverlauf in der Strömungsleiteinrichtung gemäß Fig. 3.
- Fig. 5: zeigt die Strömungsleiteinrichtung gemäß Fig. 3 von hinten.
- Fig. 6: zeigt die Strömungsleiteinrichtung gemäß Fig. 3 von unten.
- Fig. 7: zeigt die Strömungsleiteinrichtung gemäß Fig. 3 von vorn.
- Fig. 8: zeigt die Strömungsleiteinrichtung gemäß Fig. 3 von der Seite.
- Fig. 9: zeigt den Strömungsverlauf in einem Drallerzeugungsabschnitt der Strömungsleiteinrichtung gemäß Fig. 3.
- Fig. 10: zeigt den Strömungsverlauf in einem Mischabschnitt der Strömungsleiteinrichtung gemäß Fig. 3.
- Fig. 11: zeigt den Strömungsverlauf in einem Gasaustrittskanal der Strömungsleiteinrichtung gemäß Fig. 3.
- Fig. 12: zeigt eine Zusammenführung von Teilströmen in der Strömungsleiteinrichtung gemäß Fig. 3.

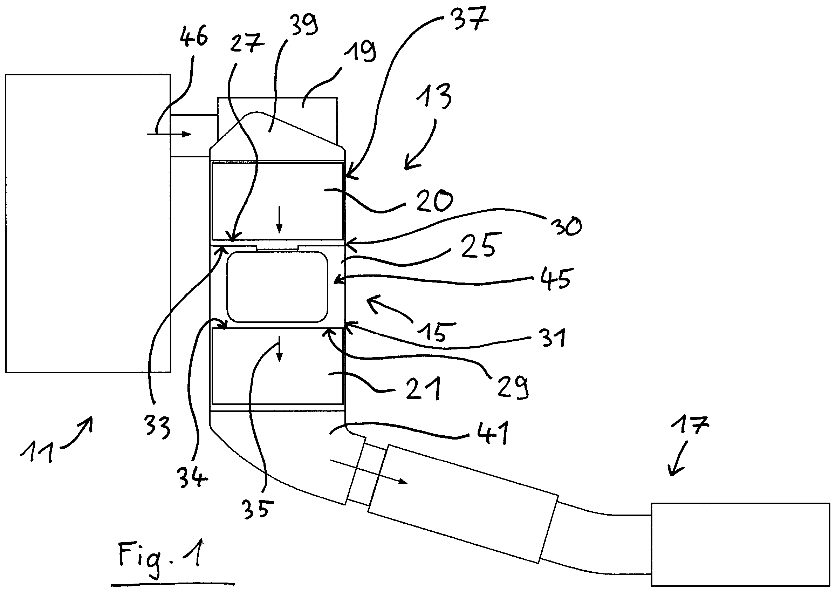

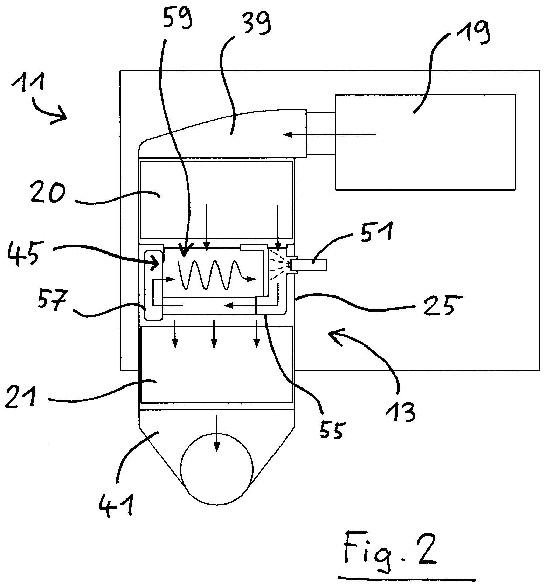

Die in Fig. 1 und 2 gezeigte Brennkraftmaschine 11 weist eine erfindungsgemäße Abgasanlage 13 auf, die hier einen motornahen Abschnitt 15 und einen Unterbodenabschnitt 17 umfasst. Der motornahe Abschnitt 15 weist einen Abgasturbolader 19, eine erste Abgasbehandlungseinrichtung in Form eines Oxidationskatalysators 20 und eine zweite Abgasbehandlungseinrichtung in Form eines Reduktionskatalysators 21, insbesondere eines SCR-Katalysators, auf. Zwischen dem Oxidationskatalysator 20 und dem Reduktionskatalysator 21 ist eine erfindungsgemäße Vorrichtung 25 zum Einbringen und Verteilen eines fließfähigen Reduktionsmittels in einen Abgasstrom 46 angeordnet.

Wie dargestellt sind der Oxidationskatalysator 20, die Vorrichtung 25 und der Reduktionskatalysator 21 zumindest im Wesentlichen koaxial zueinander angeordnet. Insbesondere erstreckt sich die Austrittsfläche 27 des Oxidationskatalysators 20 zumindest im Wesentlichen parallel zur Eintrittsfläche 29 des Reduktionskatalysators 21. Die Vorrichtung 25 weist einen Einlass 30 und einen Auslass 31 auf, deren Durchtrittsflächen 33, 34 sich zumindest im Wesentlichen parallel zueinander erstrecken und dadurch eine geradlinige Hauptströmungsrichtung 35 definieren. Weiterhin erstrecken sich die Durchtrittsflächen 33, 34 zumindest im Wesentlichen parallel zur Austrittsfläche 27 des Oxidationskatalysators 20 sowie zur Eintrittsfläche 29 des Reduktionskatalysators 21. Die Durchtrittsflächen 33, 34, die Austrittsfläche 27 des Oxidationskatalysators 20 und die Eintrittsfläche 29 des Reduktionskatalysators 21 überlappen einander und sind vorzugsweise zumindest im Wesentlichen deckungsgleich.

Der Oxidationskatalysator 20, der Reduktionskatalysator 21 und die Vorrichtung 25 sind in ein gemeinsames Gehäuse 37 integriert und schließen zumindest im Wesentlichen absatzlos aneinander an. Die Anbindung des Gehäuses 37 an den Abgasturbolader 19 erfolgt über einen Einlasstrichter 39. Ein Auslasstrichter 41 verbindet das Gehäuse 37 mit dem Unterbodenabschnitt 17 der Abgasanlage 13.

Die Vorrichtung 25 zum Einbringen und Verteilen eines fließfähigen Reduktionsmittels in den Abgasstrom 46 umfasst eine Strömungsleiteinrichtung 45, welche den aus dem Oxidationskatalysator 20 austretenden Abgasstrom 46 vom Einlass 30 zum Auslass 31 führt.

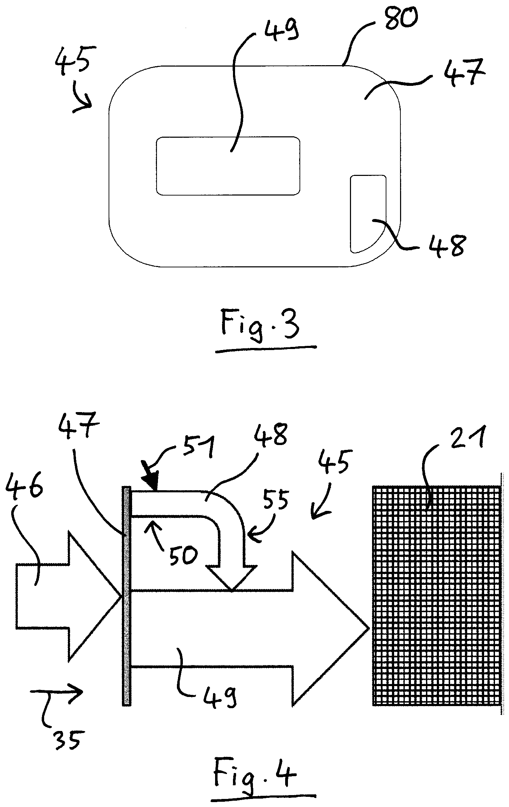

Im Bereich des Einlasses 30 befindet sich eine in Fig. 3 und 4 erkennbare Aufteilungsvorrichtung 47, vorzugsweise aus Blech, welche zwei separate Strömungspfade 48, 49 für jeweilige Teilströme des Abgasstroms 46 definiert. Wie in der schematischen Darstellung von Fig. 4 erkennbar sind die Strömungspfade 48, 49 in strömungstechnischer Hinsicht parallel zueinander angeordnet. Die Aufteilung des Abgasstroms 46 in die beiden Teilströme ist bei dem dargestellten Ausführungsbeispiel unsymmetrisch. Speziell ist der erste, in Fig. 4 obere Strömungspfad 48 für einen beträchtlich kleineren Teilstrom ausgelegt ist als der zweite Strömungspfad 49. Eine beispielhafte bevorzugte Aufteilung beträgt 95% Massenstrom zu 5% Massenstrom. Andere Aufteilungen der Massenströme sind aber auch denkbar.

In einem Eintrittsabschnitt 50 des ersten Strömungspfads 48 ist ein Injektor 51 vorgesehen, der in grundsätzlich bekannter Weise zum Einsprühen eines flüssigen Reduktionsmittels, insbesondere einer wässrigen Harnstofflösung, in den Teilstrom des ersten Strömungspfads 48 ausgebildet ist. Stromabwärts des Eintrittsabschnitts 50 befindet sich ein Mischabschnitt 55, der zumindest im Wesentlichen quer zur Hauptströmungsrichtung 35 verläuft.

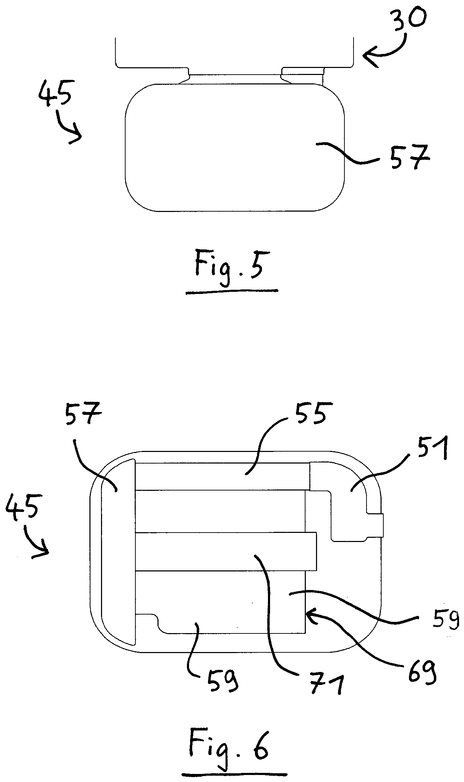

Im Einzelnen kann die Gestaltung der Strömungsleiteinrichtung 45 den Darstellungen der Fig. 3 bis 8 entnommen werden. Insbesondere geht aus Fig. 6 hervor, dass sich der Mischabschnitt 55 einmal durch die gesamte Strömungsleiteinrichtung 45 hindurch erstreckt. Der als Umlenkungsabschnitt ausgebildete Eintrittsabschnitt 50 lenkt den Teilstrom des ersten Strömungspfads 48 um und erzeugt eine Verwirbelung desselben. Der Mischabschnitt 55 mündet in eine Umlenkkammer 57.

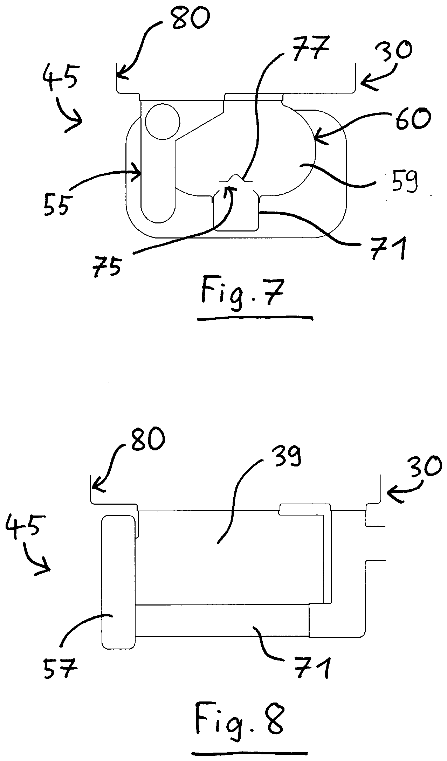

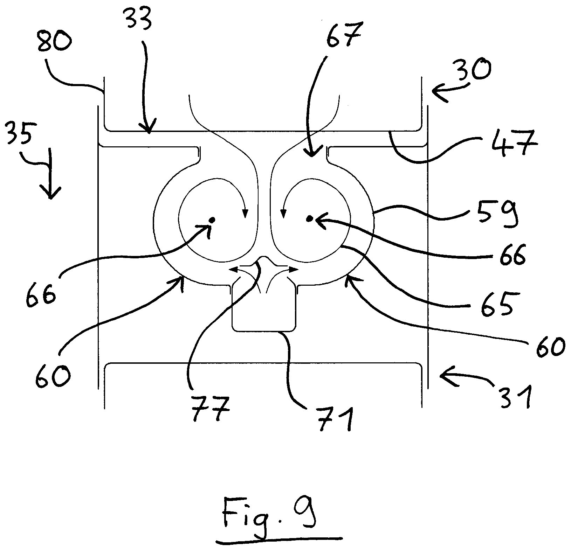

Der Teilstrom des zweiten Strömungspfads 49 gelangt vom Einlass 30 in einen Drallerzeugungsabschnitt 59 (Fig. 7 und 8), der zwei gegenüberliegende und jeweils nach außen gekrümmte Wandabschnitte 60 aufweist. Aufgrund dieser Gestaltung bildet sich während des Betriebs der Brennkraftmaschine 11 wie in Fig. 9 zu sehen ein Doppeldrall 65 in dem Drallerzeugungsabschnitt 59 aus. Die jeweiligen Drallachsen 66 sind vorzugsweise parallel zueinander und rechtwinklig zur Hauptströmungsrichtung 35 angeordnet.

Der Drallerzeugungsabschnitt 59 weist eine Eingangsfläche 67 (Fig. 9) auf, die sich im Wesentlichen parallel zur Durchtrittsfläche 33 des Einlasses 30 erstreckt. Weiterhin weist der Drallerzeugungsabschnitt 59 eine Ausgangsfläche 69 (Fig. 6) auf, die sich im Wesentlichen rechtwinklig zur Durchtrittsfläche 34 des Auslasses 31 erstreckt. Das heißt der Teilstrom des ersten Strömungspfads 48 wird zunächst so umgelenkt, dass er quer zur Hauptströmungsrichtung 35 strömt. Aus dem Drallerzeugungsabschnitt 59 austretendes Abgas wird vor Erreichen des Auslasses 31 wiederum so umgelenkt, dass es in der Hauptströmungsrichtung 35 strömt.

Die Umlenkkammer 57 lenkt den aus dem Mischabschnitt 55 austretenden Teilstrom U-förmig um und führt ihn einem länglichen Gasaustrittskanal 71 (Fig. 6-9) zu, der sich quer zu der Hauptströmungsrichtung 35 erstreckt und durch eine ebenfalls längliche Austrittsöffnung 75 (Fig. 7) mit dem Drallerzeugungsabschnitt 59 in Strömungsverbindung steht. Auf die Strömungsführung bezogen erstrecken sich der Mischabschnitt 55 und der Gasaustrittskanal 71 zumindest im Wesentlichen in gegensätzlichen Richtungen (Fig. 6).

In Fig. 7 und 9 ist ein in dem Drallerzeugungsabschnitt 59 angeordnetes Leitelement 77 aus Blech erkennbar, das durch die Austrittsöffnung 75 tretendes Abgas in Richtung der gekrümmten Wandabschnitte 60 umlenkt und so die Bildung des Doppeldralls 65 unterstützt. Das Leitelement 77 kann einen abschnittsweise U-förmigen oder V-förmigen Querschnitt aufweisen. Aus Fig. 9 geht auch hervor, dass im Bereich des Einlasses 30 ein Flansch 80 vorgesehen ist. Er ist hier an die Aufteilungsvorrichtung 47 angeformt.

Wie in Fig. 6 erkennbar ist der Mischabschnitt 55 seitlich um den Drallerzeugungsabschnitt 59 herumgeführt, so dass er im Betrieb durch diesen aufgeheizt wird. Die Ausgangsfläche 69 des Drallerzeugungsabschnitts 59 ist ferner derart angeordnet, dass aus dem Drallerzeugungsabschnitt 59 austretendes Abgas den Eintrittsabschnitt 50 von außen beaufschlagt. Fluidablagerungen wird so entgegengewirkt.

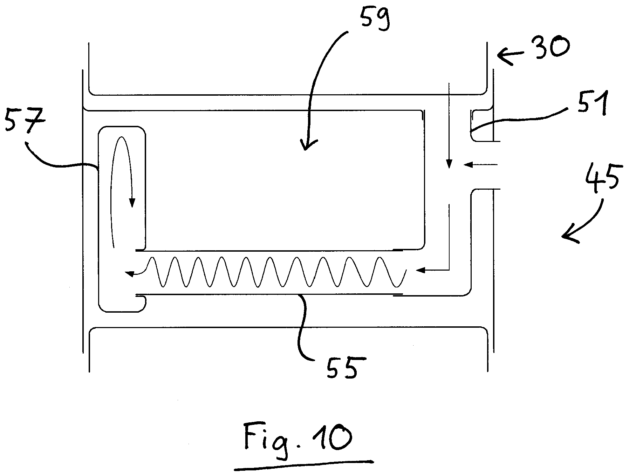

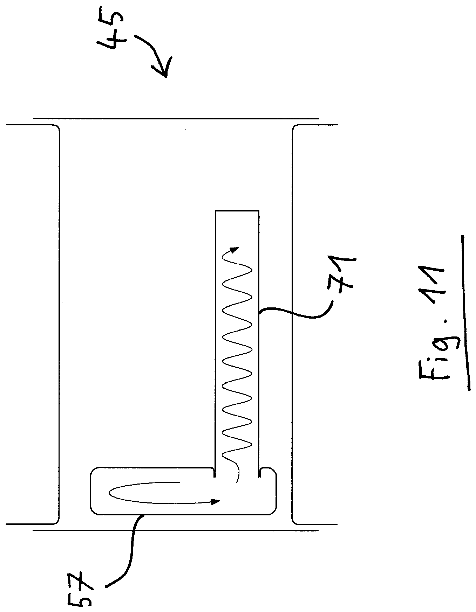

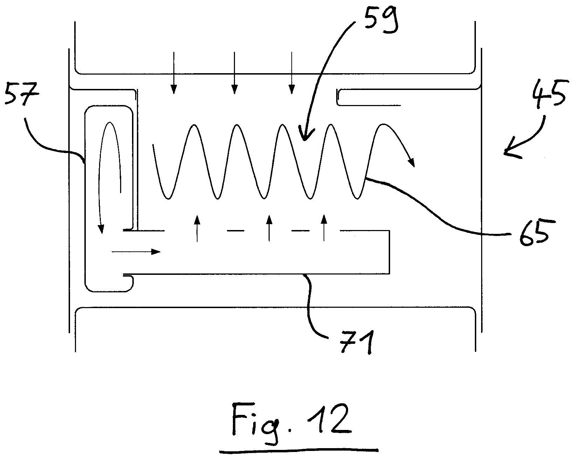

In den Fig. 10 bis 12 ist der Strömungsverlauf innerhalb der Strömungsleiteinrichtung 45 vereinfacht dargestellt, wobei jeweils einzelne Bauteile zur Verdeutlichung weggelassen sind. Sowohl in dem Mischabschnitt 55 als auch in dem Gasaustrittskanal 71 kommt es zu Verwirbelungen, wie durch Schlangenlinien verdeutlicht ist. Auch in der Umlenkkammer 57 bilden sich eine Verwirbelung und/oder ein Drall aus.

Während des Betriebs der Brennkraftmaschine 11 wird also der aus dem Oxidationskatalysator 20 austretende Abgasstrom 46 in zwei unterschiedlich große Teilströme aufgeteilt. Der kleinere Teilstrom wird umgelenkt und gelangt zum Injektor 51, der das flüssige Reduktionsmittel einsprüht. Dieses vermischt sich mit dem Teilstrom und verdampft zu einem großen Teil. Der kleinere Teilstrom weist in der Folge eine relativ hohe Konzentration an Reduktionsmittel auf. Der größere Teilstrom gelangt ohne Zugabe von Reduktionsmittel in den Drallerzeugungsabschnitt 59 und wird ebenfalls umgelenkt. Beim Zusammenführen der beiden Teilströme im Bereich des Doppeldralls 65 findet eine wirksame Vermischung des bereits vorvermischten Reduktionsmittels im Hauptstrom statt. Am Auslass 31 liegt dann eine besonders homogene Mischung vor, mit der nachfolgend das Substrat des Reduktionskatalysators 21 beaufschlagt wird.

Dadurch dass beide Teilströme umgelenkt werden und außerdem der kleinere Teilstrom in einer Umgehungs-Anordnung um den größeren Teilstrom herumgeführt ist, ergeben sich trotzt der kompakten, im Wesentlichen koaxialen Anordnung eine relativ lange Mischstrecke sowie eine relativ große Verdampferfläche.

### Bezugszeichenliste:

- 11: Brennkraftmaschine
- 13: Abgasanlage
- 15: motornaher Abschnitt
- 17: Unterbodenabschnitt
- 19: Abgasturbolader
- 20: Oxidationskatalysator
- 21: Reduktionskatalysator
- 25: Vorrichtung zum Einbringen und Verteilen eines fließfähigen Reduktionsmittels in einen Abgasstrom
- 27: Austrittsfläche des Oxidationskatalysators
- 29: Eintrittsfläche des Reduktionskatalysators
- 30: Einlass
- 31: Auslass
- 33: Durchtrittsfläche
- 34: Durchtrittsfläche
- 35: Hauptströmungsrichtung
- 37: Gehäuse
- 39: Einlasstrichter
- 41: Auslasstrichter
- 45: Strömungsleiteinrichtung
- 46: Abgasstrom
- 47: Aufteilungsvorrichtung
- 48: erster Strömungspfad
- 49: zweiter Strömungspfad
- 50: Eintrittsabschnitt
- 51: Injektor
- 55: Mischabschnitt
- 57: Umlenkkammer
- 59: Drallerzeugungsabschnitt
- 60: gekrümmter Wandabschnitt
- 65: Doppeldrall
- 66: Drallachse
- 67: Eingangsfläche des Drallerzeugungsabschnitts
- 69: Ausgangsfläche des Drallerzeugungsabschnitts
- 71: Gasaustrittskanal
- 75: Austrittsöffnung
- 77: Leitelement
- 80: Flansch

## Patentansprüche

1. Vorrichtung (25) zum Einbringen und Verteilen eines fließfähigen Zusatzstoffs in einen Abgasstrom (46), umfassend einen Einlass (30) zum Empfangen des Abgasstroms (46) von einer ersten Abgasbehandlungseinrichtung (20), einen Auslass (31) zur Abgabe des Abgasstroms (46) an eine zweite Abgasbehandlungseinrichtung (21), eine Strömungsleiteinrichtung (45) zum Führen des Abgasstroms (46) vom Einlass (30) zum Auslass (31) und einen in die Strömungsleiteinrichtung (45) mündenden Injektor (51), wobei durch den Einlass (30) und den Auslass (31) eine zumindest im Wesentlichen geradlinige Hauptströmungsrichtung (35) der Vorrichtung (25) definiert ist,
und wobei ein stromabwärts des Injektors (51) angeordneter Mischabschnitt (55) der Strömungsleiteinrichtung (45) schräg oder quer zur Hauptströmungsrichtung (35) verläuft, insbesondere wobei der Mischabschnitt (55) in einem Winkelbereich zwischen 30° und 150°, bevorzugt zwischen 60° und 120°, besonders bevorzugt zwischen 70° und 100°, bezogen auf die Hauptströmungsrichtung (35) verläuft,
**dadurch gekennzeichnet, dass**
die Strömungsleiteinrichtung (45) einen ersten, den Mischabschnitt (55) umfassenden Strömungspfad (48) für einen ersten Teilstrom des Abgasstroms (46) und einen separaten zweiten Strömungspfad (49) für einen zweiten Teilstrom des Abgasstroms (46) definiert, wobei der erste und der zweite Strömungspfad (48, 49) in strömungstechnischer Hinsicht parallel zueinander angeordnet sind, und wobei
der zweite Strömungspfad (49) einen Drallerzeugungsabschnitt (59) umfasst, der während des Betriebs der Vorrichtung (25) aufgrund seiner Formgebung einen Drall (65), insbesondere einen Doppeldrall, in dem betreffenden Teilstrom erzeugt, wobei
der Mischabschnitt (55) zumindest abschnittsweise um den Drallerzeugungsabschnitt (59) herumgeführt ist.

2. Vorrichtung nach Anspruch 1,
**dadurch gekennzeichnet, dass**
der Einlass (30) und der Auslass (31) jeweilige Durchtrittsflächen (33, 34) aufweisen, die sich zumindest im Wesentlichen parallel zueinander erstrecken und/oder die sich in der Hauptströmungsrichtung (35) gesehen zumindest bereichsweise überlappen.

3. Vorrichtung nach zumindest einem der vorstehenden Ansprüche,
**dadurch gekennzeichnet, dass**
die Strömungsleiteinrichtung (45) einen stromaufwärts des Mischabschnitts (55) angeordneten Umlenkungsabschnitt (50) zum Umlenken des Abgasstroms und/oder zum Erzeugen einer Verwirbelung des Abgasstroms in dem Mischabschnitt (55) aufweist.

4. Vorrichtung nach zumindest einem der vorstehenden Ansprüche,
**dadurch gekennzeichnet, dass**
der Injektor (51) in den ersten Strömungspfad (48) mündet, insbesondere in einen stromaufwärtigen Eintrittsabschnitt (50) des ersten Strömungspfads (48).

5. Vorrichtung nach zumindest einem der vorstehenden Ansprüche,
**dadurch gekennzeichnet, dass**
der zweite Strömungspfad (49) für einen größeren Teilstrom ausgelegt ist als der erste Strömungspfad (48).

6. Vorrichtung nach zumindest einem der vorstehenden Ansprüche,
**dadurch gekennzeichnet, dass**
der Drallerzeugungsabschnitt (59) zum Erzeugen wenigstens eines Dralls (65) ausgebildet ist, dessen Drallachse (66) schräg oder quer, vorzugsweise zumindest im Wesentlichen rechtwinklig, zur Hauptströmungsrichtung (35) angeordnet ist.

7. Vorrichtung nach Anspruch zumindest einem der vorstehenden Ansprüche, **dadurch gekennzeichnet, dass**
der Drallerzeugungsabschnitt (59) wenigstens einen gekrümmten Wandabschnitt (60), vorzugsweise zwei gegenüberliegende und jeweils nach außen gekrümmte Wandabschnitte, aufweist.

8. Vorrichtung nach zumindest einem der vorstehenden Ansprüche,
**dadurch gekennzeichnet, dass**
der Mischabschnitt (55) in eine Umlenkkammer (57) mündet, welche den aus dem Mischabschnitt (55) austretenden Teilstrom umlenkt und einem Gasaustrittskanal (71) zuführt, der mit dem Drallerzeugungsabschnitt (59) in Strömungsverbindung steht, insbesondere wobei die Umlenkkammer (57) eine zumindest im Wesentlichen U-förmige Umlenkung bewirkt und/oder der Mischabschnitt (55) und der Gasaustrittskanal (71) sich zumindest im Wesentlichen in gegensätzlichen Richtungen erstrecken.

9. Vorrichtung nach Anspruch 8,
**dadurch gekennzeichnet, dass**
der Gasaustrittskanal (71) zumindest durch eine, insbesondere längliche, Austrittsöffnung (75) mit dem Drallerzeugungsabschnitt (59) in Strömungsverbindung steht, insbesondere wobei in dem Drallerzeugungsabschnitt (59) ein Leitelement (77) angeordnet ist, das durch die Austrittsöffnung (75) tretendes Abgas in Richtung einer Wand des Drallerzeugungsabschnitts (59) ablenkt, wobei das Leitelement (77) bevorzugt einen U-förmigen oder V-förmigen Querschnitt oder eine Kombination davon aufweist.

10. Vorrichtung nach zumindest einem der vorstehenden Ansprüche,
**dadurch gekennzeichnet, dass**
der Drallerzeugungsabschnitt (59) einen Eingang aufweist, dessen Eingangsfläche (67) sich zumindest im Wesentlichen parallel zu einer Durchtrittsfläche (33) des Einlasses (30) erstreckt, und/oder dass der Drallerzeugungsabschnitt (59) einen Ausgang aufweist, dessen Ausgangsfläche (69) sich zumindest im Wesentlichen schräg, insbesondere senkrecht zu einer Durchtrittsfläche (34) des Auslasses (31) erstreckt.

11. Vorrichtung nach zumindest einem der vorstehenden Ansprüche,
**dadurch gekennzeichnet, dass**
der Drallerzeugungsabschnitt (59) einen Ausgang aufweist, der derart angeordnet ist, dass aus diesem austretendes Abgas wenigstens einen Abschnitt des ersten Strömungspfads (48) beaufschlagt, und/oder dass der Drallerzeugungsabschnitt (59) einen Ausgang aufweist, der derart angeordnet ist, dass aus diesem austretendes Abgas vor Erreichen des Auslasses (31) um wenigstens 20°, vorzugsweise um wenigstens 30°, umgelenkt wird.

12. Abgasanlage (13) mit einer ersten Abgasbehandlungseinrichtung (20), insbesondere einem Oxidationskatalysator, einer zweiten Abgasbehandlungseinrichtung (21), insbesondere einem Reduktionskatalysator, und einer Vorrichtung (25) zum Einbringen und Verteilen eines fließfähigen Zusatzstoffs in einen von der ersten Abgasbehandlungseinrichtung (20) zur zweiten Abgasbehandlungseinrichtung (21) geführten Abgasstrom,
**dadurch gekennzeichnet, dass**
die Vorrichtung (25) zum Einbringen und Verteilen des fließfähigen Zusatzstoffs gemäß einem der vorstehenden Ansprüche ausgebildet ist und zwischen der ersten und der zweiten Abgasbehandlungseinrichtung (20, 21) angeordnet ist.

13. Abgasanlage nach Anspruch 12,
dadurch **ge ken n z e ich n e t** , dass
die erste Abgasbehandlungseinrichtung (20), die zweite Abgasbehandlungseinrichtung (21) und die Vorrichtung (25) zum Einbringen und Verteilen des fließfähigen Zusatzstoffs in ein gemeinsames, einstückiges oder mehrstückiges Gehäuse (37) integriert sind und/oder zumindest im Wesentlichen absatzlos aneinander anschließen, insbesondere wobei eine Austrittsfläche (27) der ersten Abgasbehandlungseinrichtung (20) und eine Eintrittsfläche (29) der zweiten Abgasbehandlungseinrichtung (21) sich zumindest im Wesentlichen parallel zueinander erstrecken und/oder in einer geradlinigen Hauptströmungsrichtung (35) gesehen zumindest bereichsweise überlappen.

## Claims

1. An apparatus (25) for introducing and distributing a flowable additive into an exhaust gas flow (46), the apparatus (25) comprising an inlet (30) to receive the exhaust gas flow (46) from a first exhaust gas treatment device (20), an outlet (31) to output the exhaust gas flow (46) to a second exhaust gas treatment device (21), a flow conducting device (45) to lead the exhaust gas flow (46) from the inlet (30) to the outlet (31), and an injector (51) opening into the flow conducting device (45), wherein an at least substantially straight-line main flow direction (35) of the apparatus (25) is defined by the inlet (30) and the outlet (31);
and wherein a mixing section (55) of the flow conducting device (45) arranged downstream of the injector (51) extends obliquely or transversely to the main flow direction (35), in particular wherein the mixing section (35) extends in an angular range between 30° and 150°, preferably between 60° and 120°, particularly preferably between 70° and 100°, with respect to the main flow direction (35),
**characterized in that**
the flow conducting device (45) defines a first flow path (48) comprising the mixing section (55) for a first part flow of the exhaust gas flow (46) and a separate second flow path (49) for a second part flow of the exhaust gas flow (46), with the first and second flow paths (48, 49) being arranged in parallel with one another in a technical flow aspect, and wherein
the second flow path (49) comprises a swirl generating section (59) which generates a swirl (65), in particular a double swirl, in the respective part flow during operation of the apparatus (25) due to its shape, wherein
the mixing section (55) is at least sectionally led around the swirl generating section (59).

2. An apparatus in accordance with claim 1,
**characterized in that**
the inlet (30) and the outlet (31) have respective passage surfaces (33, 34) which extend at least substantially in parallel with one another and/or which at least regionally overlap viewed in the main flow direction (35).

3. An apparatus in accordance with at least one of the preceding claims, **characterized in that**
the flow conducting device (45) has a deflection section (50) arranged upstream of the mixing section (55) for deflecting the exhaust gas flow and/or for generating an eddy of the exhaust gas flow in the mixing section (55).

4. An apparatus in accordance with at least one of the preceding claims, **characterized in that**
the injector (51) opens into the first flow path (48), in particular into an upstream entry section (50) of the first flow path (48).

5. An apparatus in accordance with at least one of the preceding claims, **characterized in that**
the second flow path (49) is adapted for a larger part flow than the first flow path (48).

6. An apparatus in accordance with at least one of the preceding claims, **characterized in that**
the swirl generating section (59) is configured for generating at least one swirl (65) whose swirl axis (66) is arranged obliquely or transversely, preferably at least substantially at a right angle, to the main flow direction (35).

7. An apparatus in accordance with at least one of the preceding claims, **characterized in that**
the swirl generating section (59) has at least one curved wall section (60), preferably two oppositely disposed and respectively outwardly curved wall sections.

8. An apparatus in accordance with at least one of the preceding claims, **characterized in that**
the mixing section (55) opens into a deflection chamber (57) which deflects the part flow exiting the mixing section (55) and supplies it to a gas exit passage (71) which is in flow communication with the swirl generating section (59), in particular with the deflection chamber (57) effecting an at least substantially U-shaped deflection, and/or **in that** the mixing section (55) and the gas exit passage (71) extend at least substantially in opposite directions.

9. An apparatus in accordance with claim 8,
**characterized in that**
the gas exit passage (71) is in flow communication with the swirl generating section (59) at least through an exit opening (75), in particular an elongate exit opening (75), in particular with a guide element (77) being arranged in the swirl generating section (59) and deflecting the exhaust gas exiting through the exit opening (75) in the direction of a wall of the swirl generating section (59), with the guide element (77) having a U-shaped or V-shaped cross-section or a combination thereof.

10. An apparatus in accordance with at least one of the preceding claims, **characterized in that**
the swirl generating section (59) has an intake whose intake surface (67) extends at least substantially in parallel with a passage surface (33) of the inlet (30); and/or **in that** the swirl generating section (59) has an egress whose egress surface (69) extends at least substantially obliquely, in particular perpendicular, to a passage surface (34) of the outlet (31).

11. An apparatus in accordance with at least one of the preceding claims, **characterized in that**
the swirl generating section (59) has an egress which is arranged such that exhaust gas exiting it acts on at least one section of the first flow path (48); and/or **in that** the swirl generating section (50) has an egress which is arranged such that exhaust gas exiting it is deflected by at least 20°, preferably by at least 30°, before reaching the outlet (31).

12. An exhaust gas system (13) having a first exhaust gas treatment device (20), in particular an oxidation catalyst, a second exhaust gas treatment device (21), in particular a reduction catalytic converter, and an apparatus (25) for introducing and distributing a flowable additive into an exhaust gas flow led from the first exhaust gas treatment device (20) to the second exhaust gas treatment device (21),
**characterized in that**
the apparatus (25) for introducing and distributing the flowable additive is configured in accordance with any one of the preceding claims and is arranged between the first and second exhaust gas treatment device (20, 21).

13. An exhaust gas system in accordance with claim 12,
**characterized in that**
the first exhaust gas treatment device (20), the second exhaust gas treatment device (21) and the apparatus (25) for introducing and distributing the flowable additive are integrated in a common, single-piece or multi-piece, housing (37) and/or at least substantially adjoin one another without a step, in particular with an egress surface (27) of the first exhaust gas treatment device (20) and an entry surface (29) of the second exhaust gas treatment device (21) extending at least substantially in parallel with one another and/or overlapping at least regionally viewed in a straight-line main flow direction (35).

## Revendications

1. Dispositif (25) d'introduction et de répartition d'un additif fluide dans un flux de gaz d'échappement (46), comprenant une entrée (30) pour recevoir le flux de gaz d'échappement (46) en provenance d'un premier organe de traitement de gaz d'échappement (20), une sortie (31) pour délivrer le flux de gaz d'échappement (46) à un deuxième organe de traitement de gaz d'échappement (21), un organe de guidage d'écoulement (45) pour guider le flux de gaz d'échappement (46) de l'entrée (30) vers la sortie (31), et un injecteur (51) débouchant dans l'organe de guidage d'écoulement (45), dans lequel
une direction d'écoulement principal (35) au moins essentiellement rectiligne du dispositif (25) est définie par l'entrée (30) et par la sortie (31),
et un tronçon de mélange (55) de l'organe de guidage d'écoulement (45), disposé en aval de l'injecteur (51), s'étend en oblique ou transversalement par rapport à la direction d'écoulement principal (35), en particulier le tronçon de mélange (55) s'étend dans une plage angulaire comprise entre 30° et 150°, de préférence entre 60° et 120°, de manière particulièrement préférée entre 70° et 100°, par rapport à la direction d'écoulement principal (35), **caractérisé en ce que**
l'organe de guidage d'écoulement (45) définit un premier chemin d'écoulement (48) comprenant le tronçon de mélange (55) pour un premier flux partiel du flux de gaz d'échappement (46) et un deuxième chemin d'écoulement (49) séparé pour un deuxième flux partiel du flux de gaz d'échappement (46), le premier et le deuxième chemin d'écoulement (48, 49) étant disposés parallèlement l'un à l'autre en termes d'écoulement, et
le deuxième chemin d'écoulement (49) comprend un tronçon de génération de tourbillon (59) qui, pendant le fonctionnement du dispositif (25), génère, en raison de sa forme, un tourbillon (65), en particulier un double tourbillon, dans le flux partiel correspondant, et
le tronçon de mélange (55) est mené au moins localement autour du tronçon de génération de tourbillon (59).

2. Dispositif selon la revendication 1,
**caractérisé en ce que**
l'entrée (30) et la sortie (31) présentent des surfaces de passage respectives (33, 34) qui s'étendent au moins sensiblement parallèlement l'une à l'autre et/ou qui se chevauchent au moins localement, vues dans la direction d'écoulement principal (35).

3. Dispositif selon l'une au moins des revendications précédentes,
**caractérisé en ce que**
l'organe de guidage d'écoulement (45) présente un tronçon de renvoi (50) disposé en amont du tronçon de mélange (55) et destiné à renvoyer le flux de gaz d'échappement et/ou à générer un tourbillonnement du flux de gaz d'échappement dans le tronçon de mélange (55).

4. Dispositif selon l'une au moins des revendications précédentes,
**caractérisé en ce que**
l'injecteur (51) débouche dans le premier chemin d'écoulement (48), en particulier dans un tronçon d'entrée amont (50) du premier chemin d'écoulement (48).

5. Dispositif selon l'une au moins des revendications précédentes,
**caractérisé en ce que**
le deuxième chemin d'écoulement (49) est conçu pour un flux partiel plus important que celui du premier chemin d'écoulement (48).

6. Dispositif selon l'une au moins des revendications précédentes,
**caractérisé en ce que**
le tronçon de génération de tourbillon (59) est réalisé pour générer au moins un tourbillon (65) dont l'axe de tourbillon (66) est disposé en oblique ou transversalement, de préférence au moins sensiblement à angle droit, par rapport à la direction d'écoulement principal (35).

7. Dispositif selon l'une au moins des revendications précédentes,
**caractérisé en ce que**
le tronçon de génération de tourbillon (59) comprend au moins une portion de paroi incurvée (60), de préférence deux portions de paroi opposées et incurvées chacune vers l'extérieur.

8. Dispositif selon l'une au moins des revendications précédentes,
**caractérisé en ce que**
le tronçon de mélange (55) débouche dans une chambre de renvoi (57) qui renvoie le flux partiel sortant du tronçon de mélange (55) et l'amène à un canal de sortie de gaz (71) qui est en communication fluidique avec le tronçon de génération de tourbillon (59), en particulier la chambre de renvoi (57) provoquant un renvoi au moins sensiblement en forme de U, et/ou le tronçon de mélange (55) et le canal de sortie de gaz (71) s'étendant au moins sensiblement dans des directions opposées.

9. Dispositif selon la revendication 8,
**caractérisé en ce que**
le canal de sortie de gaz (71) est en communication fluidique avec le tronçon de génération de tourbillon (59) au moins par une ouverture de sortie (75), en particulier allongée, en particulier un élément de guidage (77) étant disposé dans le tronçon de génération de tourbillon (59), lequel dévie les gaz d'échappement, passant par l'ouverture de sortie (75), en direction d'une paroi du tronçon de génération de tourbillon (59), l'élément de guidage (77) présentant de préférence une section transversale en forme de U ou en forme de V ou une combinaison de ces formes.

10. Dispositif selon l'une au moins des revendications précédentes,
**caractérisé en ce que**
le tronçon de génération de tourbillon (59) présente une entrée dont la surface d'entrée (67) s'étend au moins sensiblement parallèlement à une surface de passage (33) de l'entrée (30), et/ou
**en ce que** le tronçon de génération de tourbillon (59) présente une sortie dont la surface de sortie (69) s'étend au moins sensiblement en oblique, en particulier perpendiculairement à une surface de passage (34) de la sortie (31).

11. Dispositif selon l'une au moins des revendications précédentes,
**caractérisé en ce que**
le tronçon de génération de tourbillon (59) présente une sortie qui est disposée de telle sorte que les gaz d'échappement sortant de celle-ci sollicitent au moins un tronçon du premier chemin d'écoulement (48), et/ou
**en ce que** le tronçon de génération de tourbillon (59) présente une sortie qui est disposée de telle sorte que les gaz d'échappement sortant de celle-ci sont renvoyés d'au moins 20°, de préférence d'au moins 30°, avant d'at-teindre la sortie (31).

12. Système d'échappement de gaz (13) comprenant un premier organe de traitement de gaz d'échappement (20), en particulier un catalyseur d'oxydation, un deuxième organe de traitement de gaz d'échappement (21), en particulier un catalyseur de réduction, et un dispositif (25) d'introduction et de répartition d'un additif fluide dans un flux de gaz d'échappement mené depuis le premier organe de traitement de gaz d'échappement (20) vers le deuxième organe de traitement de gaz d'échappement (21),
**caractérisé en ce que**
le dispositif (25) d'introduction et de répartition de l'additif fluide est réalisé selon l'une des revendications précédentes et est disposé entre le premier et le deuxième organe de traitement de gaz d'échappement (20, 21).

13. Système d'échappement de gaz selon la revendication 12,
**caractérisé en ce que**
le premier organe de traitement de gaz d'échappement (20), le deuxième organe de traitement de gaz d'échappement (21) et le dispositif (25) d'introduction et de répartition de l'additif fluide sont intégrés dans un boîtier (37) commun, monobloc ou en plusieurs parties, et/ou se raccordent au moins sensiblement sans décrochement, en particulier une surface de sortie (27) du premier organe de traitement de gaz d'échappement (20) et une surface d'entrée (29) du deuxième organe de traitement de gaz d'échappement (21) s'étendent au moins sensiblement parallèlement l'une à l'autre et/ou se chevauchent au moins localement, vues dans une direction d'écoulement principal (35) rectiligne.
